# EUROPEAN PATENT SPECIFICATION

(11) **EP 3 982 608 B1**
(45) Date of publication and mention of the grant of the patent: **14.05.2025**
(21) Application number: 20382885.0
(22) Date of filing: 07.10.2020
(51) Int. Cl.: H04L 69/00, H04L 65/1104

(54) **FACILITATING COMMUNICATION SESSIONS**
ERMÖGLICHUNG VON KOMMUNIKATIONSSITZUNGEN
FACILITATION DE SESSIONS DE COMMUNICATION

(43) Date of publication of application: 13.04.2022
(73) Proprietor: Vodafone Group Services Limited, Newbury, Berkshire RG14 2FN (GB)
(72) Inventor: Dominguez, Rafael, London W2 6BY (GB); Ortuzar, Victor, London W2 6BY (GB); Sanchez, Javier, London W2 6BY (GB)
(74) Representative: Boult Wade Tennant LLP

(56) References cited:
- WO-A1-2008/087428
- WO-A1-2014/094798
- US-A1- 2005 060 411
- CAO F ET AL: "Response Identity in Session Initiation Protocol; draft-cao-sip-response-identity-00.txt", RESPONSE IDENTITY IN SESSION INITIATION PROTOCOL; DRAFT-CAO-SIP-RESPONSE-IDENTITY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 January 2006 (2006-01-10), XP015043339

## Description

### Field of the Disclosure

The present disclosure concerns communication sessions in telecommunications networks, and more particularly to methods for facilitating communication sessions and entities for facilitating communication sessions and/or communicating via telecommunications networks.

### Background to the Disclosure

Achieving backwards-compatibility in Voice over LTE (VoLTE) implementations is challenging due to the prevalence of legacy devices. VoLTE is based on the IP Multimedia Subsystem (IMS) network, with specific profiles for control and media planes of voice service on LTE, defined by the GSM Association (GSMA) in PRD IR.92. Voice service (control and media planes) is delivered as data flows within the LTE data bearer. VoLTE has up to three times more voice and data capacity than 3G UMTS and up to six times more than 2G GSM. Moreover, it frees up bandwidth, because VoLTE packet headers are smaller than headers in unoptimised Voice over IP (VoIP) or LTE.

The IMS is an architectural framework for delivering IP multimedia services. Historically, mobile phones provided voice call services over a circuit-switched (CS) network, rather than over an IP packet-switched network. Alternative methods of delivering voice or other multimedia services over IP have become available on smartphones, but they have not become standardised across the industry. IMS is an architectural framework intended to provide such standardisation.

To facilitate integration with the Internet, IMS uses IETF protocols wherever possible, such as the Session Initiation Protocol (SIP), for instance. According to 3GPP, IMS is not intended to standardise applications, but rather to aid the access of multimedia and voice applications from wireless and wireline terminals, to create a form of fixed-mobile convergence (FMC). This is done by having a horizontal control layer that isolates the access network from the service layer. In IMS, Application Servers (ASs) provide services to the users.

VoLTE is the approved 3GPP standard to provide voice and video over fixed and mobile broadband and includes the following characteristics:
- IMS-based VolP solution over 4G (LTE) radio access and packet switched (PS) domain;
- Multimedia Capable: Convergence of mobile, fixed and WiFi accesses is desired, due to a large increase in smartphones and many new apps for communication including multimedia;
- Quality: first VolP call scheme with guaranteed quality. VoLTE is the industry accepted standard for high quality voice over LTE access;
- Interoperability: with other networks (interconnect & roaming) and legacy users & services;
- Spectral efficiency: ~2 times more VoLTE calls per MHz than legacy calls; and
- Keep the voice business in a fragmented market by expanding with more services.

However, the implementation of VoLTE is not straightforward, due to the complexity of the existing heterogeneous service:
- Handsets carry an ad-hoc implementation. Even if the IR.92 is mandatory for VoLTE implementers, not every aspect is mandatory and there could be slight but important differences that force the network operator to complete exhaustive end-to-end tests with all possible combinations of handsets;
- Legacy IMS services exist. The IMS specification, starting from the RFC 3261, has numerous possible implementations, which are not always backwards compatible. For example, it is not uncommon for legacy services not to be compatible with preconditions and UPDATE methods, commonly used by VoLTE subscribers; and
- Local ringing tone generation has been substantially changed in IR.92, and those changes are not backward-compatible.

A particular issue addressed by the present disclosure is compatibility with legacy handsets, in particular in regard to the generation of ringing tones when fixed SIP phones are used. Many networks include millions of legacy devices, each having particular circumstances and capabilities and also different SIP implementations. Problems lie with backwards compatibility of IR.92, and specifically, local ringing tone generation. In VoLTE, a 183 session progress message with SDP is mandatory, but it implies not sending RTP in the early media phase. In previous specifications, that scenario is not enforced, although it is recommended. One issue with this scenario is that, when a fixed phone calls a VoLTE user, it receives a 183 with SDP, but no RTP. In such circumstances, the fixed phone will not play the local ringing tone.

Known ways for achieving global compatibility in such cases include:
- Developing in each Application Server (AS) the last release of the standards used in the whole chain of ASs. This approach can provide compatibility, but requires the upgrade of several ASs. An ad-hoc development is needed in each node to be made compatible. The upgrade of several ASs and the associated user agents (UAs) that are using the service is complex and highly expensive;
- Replacing the end user equipment (UE) with more modern equipment, which is clearly expensive and not feasible; and
- Ad-hoc development and use of a "normalising" element somewhere in the AS/call session control function (CSCF)/session border controller (SBC) chaining.

A modification of the third approach is of interest herein. Traditionally, for IMS products, there has always existed the need to harmonise signalling based on certain parameters. Header Manipulation Rules (HMRs) in SBC are a wide example of what has been a constant requirement over time: they are a quick and configurable solution to act on a given message. This is very powerful when acting on, for example, an INVITE, but it is much more complicated to act on a response message.

In the context of the present disclosure, a User Agent (UA) may be considered to be a logical entity that can act as both a user agent client (UAC) and/or a user agent server (UAS). A user agent client may be considered to be a logical entity that creates a new request, and then uses the client transaction state machinery to send it. The role of UAC lasts only for the duration of that transaction. In other words, if a piece of software initiates a request, it acts as a UAC for the duration of that transaction. If it receives a request later, it assumes the role of a user agent server for the processing of that transaction. A user agent server may be considered to be a logical entity that generates a response to a SIP request. The response accepts, rejects, or redirects the request. This role lasts only for the duration of that transaction. In other words, if a piece of software responds to a request, it acts as a UAS for the duration of that transaction. If it generates a request later, it assumes the role of a user agent client for the processing of that transaction. Both UAS and UAC are considered to be UAs throughout this disclosure.

As an example, a certain UA may be misbehaving and it may be necessary to strip one header on a response, but based on the UA of the caller. The SBC can keep track of the pair of UAs, storing them in memory and act on behalf of both in order to do so. However, there are several reasons why this is not an optimal solution:
- It will be not always possible to do so in all the scenarios;
- Even if possible, it would be very difficult and resource-intensive to maintain all the session data in memory to modify the message quickly; and
- This would mean that much more capacity (mainly CPU and RAM) should be allocated and this would need to be activated for all calls. Such an approach would clearly be highly resource-intensive.

A known alternative to the above approaches is to break out a call via a media server, but this requires an originating AS to be modified and this is not always possible. Other known alternatives are much more expensive.

Thus, it can be seen that ensuring backwards-compatibility with legacy devices in VoLTE can present significant challenges. It is an object of this disclosure to address this and other problems with the above approaches.

WO-2014/094798 describes a method of conveying a location information representing a physical location of a first communication device.

US-2005/060411 describes a system and method for adaptation of peer-to-peer multimedia sessions.

### Summary of the Disclosure

Against this background, there are provided a method according to claim 1, a telecommunications network according to claim 12, an entity according to claim 13, and an entity according to claim 14.

The present disclosure provides improved methods for handling SIP responses in a telecommunications network. In particular, the present disclosure recognises that standard SIP response messages comprises a User-Agent header that only carries information about the UA of the device that is sending the message but that it would be advantageous in some cases if more information were present in SIP response messages. The present disclosure therefore provides a modified header that comprises further information (such as an indication of at least one characteristic of a calling and/or a called device) that may be useful for entities within a network. For instance, by providing such a modified header, it is easier for other entities in a network to take remedial action using information contained solely in the SIP message, as this new header may reduce the frequency with which network entities need to query external databases to obtain the information needed to establish a communication session. Thus, the processing and bandwidth requirements required in order to facilitate a communication session may be reduced.

In general terms, the present disclosure provides, in a first aspect, a method for facilitating a communication session between a calling device and a called device, the method comprising: generating, by the first entity, a modified SIP response including additional data, wherein the modified SIP response is a response to a SIP request made by the calling device, the additional data comprising an indication of a capability of the calling and/or the called device; receiving, at a second entity, the modified SIP response; and applying, by the second entity, one or more rules to the modified SIP response based on the additional data. Advantageously, the self-contained information in the modified SIP response may be used by the second entity to apply the one or more rules (e.g. perform further modifications to the SIP response or SDP, or to make any other changes to the communication session) without needing to query external databases. Thus, processing requirements and total number of queries may be reduced.

This method may be performed by various different entities of a telecommunications network. For instance, the generation of a modified SIP message can take place in an IMS AS or in a UE. Thus, the first entity may be an application server, AS, or a server of a back-to-back user agent, B2BUA, or a user equipment, UE (such as the called device). The second entity may be an application server, AS, a call session control function, CSCF, or a session border controller, SBC. In the context of the present disclosure, any entity of a network that participates in the exchange of SIP messages may be considered to facilitate a communication session between a calling device and a called device.

In a further aspect, there is provided a telecommunications network configured to perform any of the methods described herein.

The above aspects relate to actions performed by a telecommunications network as a whole. Nevertheless, the individual components of such a network (e.g. the first and second entities of the above-described methods) are independently advantageous.

Therefore, in a further aspect there is provided an entity (e.g. the second entity of the previously-described method, such as a SBC, AS or CSCF) of a telecommunications network for facilitating a communication session between a calling device and a called device, the entity configured to: receive a modified session initiation protocol, SIP, response including additional data, wherein the modified SIP response is a response to a SIP request made by the calling device, the additional data comprising an indication of at least one characteristic of at least one of the calling and the called device; and apply one or more rules to the modified SIP response based on the additional data. The self-contained information in the modified SIP response may advantageously be used by the entity to apply the one or more rules (e.g. perform further modifications to the SIP response, or the SDP or to make any other changes to the communication session) without needing to query external databases. Thus, this entity is more efficient than corresponding entities for performing similar functionality that are not able to obtain such information from SIP responses.

In a further aspect, there is also provided an entity for communicating via a telecommunications network, configured to: generate a modified SIP response including additional data, wherein the modified SIP response is a response to a SIP request made by a calling device to a called device, the additional data comprising an indication of at least one characteristic of at least one of the calling device and the called device; and send the modified SIP response to another entity of the telecommunications network. Thus, an entity may be configured to generate a modified and improved SIP response that may help another entity of the telecommunications network to act more effectively, reliably and/or efficiently.

More specifically, there is also provided an entity (e.g. a UE) for communicating via a telecommunications network, configured to: generate a modified SIP response including additional data, wherein the modified SIP response is a response to a SIP request made by a calling device to the entity, the additional data comprising an indication of at least one characteristic of at least one of the calling device and the entity; and send the modified SIP response to another entity of the telecommunications network (e.g. any element in the network that either uses the modified SIP response or sends the modified SIP response on to an entity that does make use of the modified SIP response). This device may be, for example, a **UE,** that receives a SIP request and responds with an improved SIP response. Thus, the advantageous SIP responses of the present disclosure can be provided purely in **a UE,** without the need to reconfigure network elements. This approach still provides the advantage of allowing other entities (e.g. SBCs) to take action with fewer queries and reduced processing requirements being required. The entity may send the modified SIP response either directly or indirectly to another entity (e.g. a proxy or SBC) that ultimately makes use of the additional data stored therein. Thus, this entity interacts with external entities to improve the functionality and efficiency of the external entities that utilise the additional data.

There is also provided an entity (e.g. an AS) of a telecommunications network for facilitating a communication session between a calling device and a called device, the entity configured to: receive a modified session initiation protocol, SIP, response including additional data, wherein the modified SIP response is a response to a SIP request made by the calling device, the additional data comprising an indication of at least one characteristic of at least one of the calling and the called device; and send the modified SIP response to another entity of the telecommunications network (e.g. any element in the network that either uses the modified SIP response or sends the modified SIP response on to an entity that does make use of the modified SIP response). Again, the entity may send the modified SIP response either directly or indirectly to another entity (e.g. a SBC) that ultimately makes use of the additional data stored therein. Thus, this entity interacts with external entities to improve the functionality and efficiency of the external entities.

Whilst an indication of at least one characteristic of at least one of the calling and the called device is preferably the additional data included in the modified SIP response, in some cases this information can be omitted entirely from the modified SIP response. For instance, the an indication of capabilities of at least one of the calling and the called device may be omitted entirely and replaced with any one or more of: an indication of a user agent of the calling device and/or the called device respectively; an indication of whether the called device is performing call forwarding; an indication of a communication protocol of the communication session; an access network of the calling device and/or the called device; an indication of a user type of the calling device and/or the called device; an indication of a subscription for the calling device and/or the called device; an indication of a data allowance for the calling device and/or the called device; an indication of a previous diversion of the SIP request; a history-info header and/or diversions headers; an indication of a current location of the calling device and/or the called device; a p-early-media header; a type allocation code, TAC, and/or a final assembly code, FAC, for the calling device and/or the called device; and/or tariff data for the calling device and/or the called device. Thus, various additional data can be included to improve the process of establishing a communication session by permitting entities in a network to obtain information that they need more efficiently and effectively without querying external databases.

Each of the above-described features can be used in any combination and can be modified to include any of the features of the following embodiments.

### Listing of Figures

The invention may be put into practice in a number of ways, and preferred embodiments will now be described by way of example only and with reference to the accompanying drawings, in which:
Figure 1 is a schematic diagram of a network for implementing embodiments of this disclosure;
Figure 2 is a schematic diagram of first and second embodiments for modifying a SIP response; and
Figure 3 is a schematic diagram illustrating the method of the first embodiment.

### Detailed Description of Preferred Embodiments

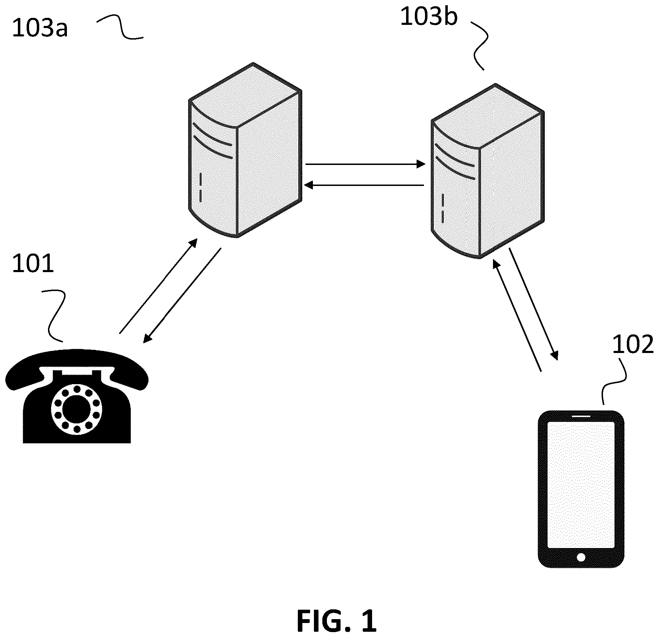

In Figure 1, there is shown an example of devices and a network for implementing the present disclosure. In Figure 1, a fixed SIP phone 101 and a softphone 102 are shown. These can communicate via the entities 103a and 103b of a telecommunications network. The phones 101 and 102 are in bi-directional communication with the entities 103a and 103b, respectively.

In use, the fixed SIP phone 101 may attempt to communicate with the softphone 102. Entities 103a and 103b are used to establish a communication session. The transaction starts with the fixed SIP phone 101 making an INVITE request for the softphone 102. The INVITE request is sent to the first network entity 103a from the fixed SIP phone 101, and the first network entity 103a forwards the INVITE request for the softphone 102 to the second network entity 103b. The first network entity 103a may send a TRYING response to the fixed SIP phone 101.

The second network entity 103b will receive the INVITE from the first network entity 103a, and will behave in a similar way to the first network entity 103a in that it will forward an INVITE request to the softphone 102. After forwarding the INVITE request, the second network entity 103b may itself issue a TRYING response to the first network entity 103a.

After having received the SIP INVITE request, the softphone 102 will typically start ringing, because a call request has been received. The softphone 102 therefore sends a RINGING response back to the second network entity 103b, which will be sent to the fixed SIP phone 101 via the first network entity 103a. Thus, the fixed SIP phone 101 receives a notification that the softphone 102 has received the SIP INVITE.

If the softphone 102 accepts the call, a 200 OK response is sent by the softphone 102 to the second network entity 103b. The 200 OK response follows the same route as the route followed by the INVITE, except in reverse. The fixed SIP phone 101 will send an ACK message to confirm the setup of the call. This 3-way handshaking method (e.g. comprising INVITE, OK and ACK messages) is intended in theory to ensure reliable call setup.

Once a connection has been set up between the fixed SIP phone 101 and the softphone 102, media flows between the two endpoints. Media flow is controlled using protocols different from SIP, such as Session Description Protocol (SDP) or Real-time Transport Protocol (RTP), for example.

It will be appreciated that Figure 1 is for illustrative purposes and that other numbers of elements can be present. For instance, there may be more than two entities 103a and 103b of the telecommunications network, depending on the particular network architecture employed. Moreover, the fixed SIP phone 101 and the softphone 102 can be other types of devices.

The present disclosure provides an improved way of controlling communication sessions in a telecommunications network. The present disclosure recognises that the process described in respect of Figure 1 does not work perfectly in all scenarios, and therefore proposes the introduction of at least one new header in SIP response messages. In some cases, two or three new headers (and perhaps more) are added to SIP response messages. In the case of there being two or more new headers, these new headers are not mutually exclusive and can be provided together or independently to advantageous effect.

One of the new headers proposed herein is a new header for SIP responses, described herein as a "Combined User-Agent" header, which contains data identifying a characteristic of a calling device and a called device (which is also referred to herein as a call receiving device). The traditional UA header in SIP messages only carries information about the UA of the device that is sending the message. In the case of a SIP request from a calling device to a called device, this means that the UA header of the SIP response sent by the called device will identify the UA of the called device but will contain no information about the UA of the calling device. As described previously, in some scenarios, a certain UA may be misbehaving and it may be necessary to strip one header on a response based on the UA of the caller. By providing a modified header in a SIP message that identifies an additional characteristic of the calling device, it is easier to take remedial action using information contained solely in the SIP message, as this new header may avoid (or at least reduce the frequency with which) network entities need to query external databases. Thus, processing and bandwidth requirements at the network may be reduced.

The Combined User-Agent header of the present disclosure may carry additional fields, and it is preferred that the Combined User-Agent header carries three fields: information about the calling device (e.g. an identification of its user agent); information about the called device (e.g. an identification of its user agent); and information about whether redirecting is occurring (to cover the case in which call forwarding takes place). As can be imagined, the syntax can be adapted in the SIP format with no modification on the intention. The precise nomenclature for the fields is not important and may vary in practice. It can vary based on preferences and even based on the availability of the information itself. Nevertheless, it will follow general rules for SIP headers.

Hence, in general terms, the additional data in the methods of the present disclosure comprises an indication of at least one characteristic of the calling device and/or the called device. The at least one characteristic comprises an indication of a user agent of the calling device and/or the called device respectively. When an indication of at least one characteristic of the called device is provided, the indication of at least one characteristic of the called device may comprise an indication of whether the called device is performing call forwarding. Providing this information in a SIP response leads to improved processing by other entities within the network.

The architecture depicted in Figure 1 can be negatively affected by a call going through one or more back-to-back user agents (B2BUAs), which do not always maintain the original user-agent header. This can be used to advantageous effect by introducing an additional header (e.g. a new private header, such as p-caller-user-header), which will not be modified, to a SIP message. Normally, either P or X headers do not have a standard meaning and they are defined so they can carry information intended to be understood for a specific entity, so, if they are not understood, they are forwarded without being modified. Thus, a new p-header is a preferred option for implementing this new header, as p-headers are special header fields whose applicability is limited to private networks with a certain topology and characteristics of lower layers' protocols, where a more general solution is not available or appropriate in all cases. Providing such a header makes it possible to infer the capabilities of the AS that is serving the customer. For instance, it may be possible to determine that the user-agent header has been modified by a B2BUA, due to it differing from the p-caller-user-header header. Moreover, it may be possible to infer, from the nature of the modification that has occurred, which specific B2BUA or type of B2BUA has modified the user-agent header. It is possible for a B2BUA to modify the User-Agent field, as they act both on the user side and server side. For example, if the B2BUA populates this field as VoLTE MTAS, it can be inferred that it is indeed a VoLTE user that is receiving the call. Hence, in generalised terms, in the methods of the present disclosure, the additional data in at least one new header may duplicate information contained in the SIP response. This advantageously may allow further information about a user device to be inferred than is possible from a conventional SIP response.

Moreover, it can be seen in generalised terms that the methods of this disclosure advantageously comprise adding at least one new header to the SIP response, the new header comprising the additional data. Enhancing SIP responses in this way allows other entities to act on the SIP response efficiently with a reduced need to query external data sources.

The Combined User-Agent field can be maintained at a UA level, but there are further modifications to SIP headers that than can be beneficial if mixed with other databases. A further header is described herein and is termed an "Enhanced User-Agent" header. The rationale behind the Enhanced User-Agent header is to group certain actions to be taken, where possible, at an AS level.

The data to be aggregated (that is, the additional data included within the modified SIP response) in the Enhanced User-Agent will comprise one or a plurality of entries from the list below, and can include any combination of the following:
- Provisioning data for the calling device and/or the called device;
- The access network used by the calling device and/or called devices;
- Type of use; and
- UA / TACFacc / user type (e.g. subscriber type) for the calling device and/or called devices.

In this case, Type of use is a field to be used to mark specific billing scenarios: for example, a postpaid user calling a premium number, or calling a national fixed number. This granularity is already calculated to populate call detail records (CDRs) and can be used for this same objective. TACFacc are the eight more representative figures of the IMEI. They are assigned by the GSMA to manufacturers to identify handsets.

It will be appreciated that the Combined User-Agent, p-caller-user-header header and Enhanced User-Agent headers can be provided and maintained independently of one another to provide improvements in the network operations. However, it will also be appreciated that all three headers can be provided together in a single SIP message, or two of the three headers can be provided in a single SIP message. For instance, the p-caller-user-header header and Combined User-Agent headers can be provided together; or the p-caller-user-header header and Enhanced User-Agent headers can be provided together; or the Enhanced User-Agent and Combined User-Agent headers can be provided together.

Thus, in generalised terms, the present disclosure provides methods comprising adding a plurality of new headers to the SIP response, each of the plurality of new headers comprising the additional data. Each of the plurality of new headers may comprise different additional data. However, as noted previously, at least some of the information added to one of the new headers may duplicate other information already in the SIP response (e.g. a duplicate version of the User-Agent field can be used to identify whether a B2BUA has modified the standard User-Agent field).

The utility of the Combined User-Agent and the Enhanced User-Agent headers can be demonstrated by the following worked example. In this example, the aim is to discriminate the following network scenario: a Brooklyn (SIP fixed phone for residential customers) is calling a VoLTE user that is attached to a 4G network. This information (the additional data included in the modified SIP response) can be extracted from several data sources:
- The Brooklyn phone's status can be extracted from calling UA or contact. Both can be used depending on the network topology (that is, either the User-Agent or the contact SIP header can be used for this purpose);
- The VoLTE device's provisioning status (e.g. information about the status, such as active/inactive, customer type, such as prepaid/postpaid/corporate, tariff data, and/or information about whether the device is multiSIM, fixed, etc.) can be obtained from the common user repository (CUR) (which can be obtained for both the calling device and/or the called device, depending on if the called device is a subscriber of the same operator or not); and
- The coverage of the called device can be obtained from P-Access-Network-Info header of the SIP responses.

Matching all of the above information together via certain rules can benefit other ASs to apply simpler rules to these types of communications. For instance, additional information may be included in the SIP flow, so any AS in the chain can benefit from this additional information if needed. This allows other entities in the telecommunications network to obtain information that they may need in order to take action. For example, a legacy IPBX (Internet Protocol private branch exchange) can choose to act and remove the support for 100rel in the call (100rel is an option used to indicate that the reliable provisional responses are supported or required). Using the present disclosure, such information can be obtained directly from a SIP response message without having to query external data sources, thereby reducing signalling traffic, bandwidth and processing requirements. Thus, in generalised terms, it is advantageous to modify a SIP response to include additional data, in which the additional data comprises an indication of at least one characteristic of the calling device and/or the called device. In certain cases, it is also advantageous for the method to comprise a step of obtaining (e.g. by an AS in the network), provisioning data for the calling device and/or the called device from a common user repository, CUR, wherein the additional data comprises the provisioning data.

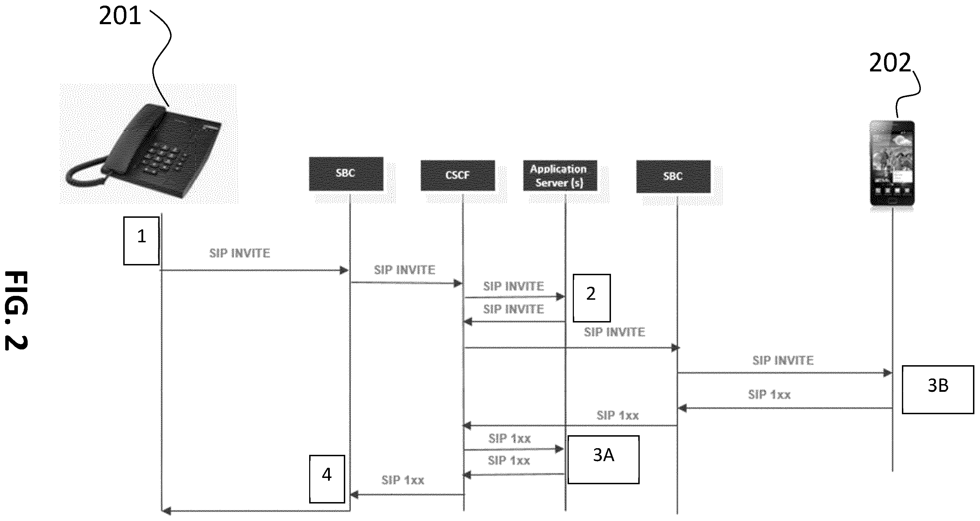

The AS may be customisable to apply the protocol adaptations itself, but in some cases, it is preferable to mark the message backwards to apply the changes. This means that any adaptation possible can be directly applied on the AS server, but it entails some type of risk, as there are other AS that may act as well. Thus, it is preferable to act as close as possible to the user equipment. An example is shown in Figure 2. More specifically, in Figure 2, there is shown an example of the example mentioned above: a fixed SIP phone 201 calls a VoLTE phone 202. The steps of Figure 2 are discussed in turn below and demonstrate how an improved SIP message can be generated using the present disclosure.

### Step 1 - Generation of a SIP INVITE message

In step 1, the SIP phone 201 initiates a call to a VoLTE user having a VoLTE phone 202. An example of a suitable INVITE message for initiating such a call is shown below. Of course, this is only an example, and many more headers and options are possible. Moreover, it is also possible to omit some of the headers in the example below. In this example, the SDP is not included for the sake of simplicity. SDP is the Session Description Protocol, which provides a standard way of conveying media inside an INVITE. It is specified on the RFC 4566.

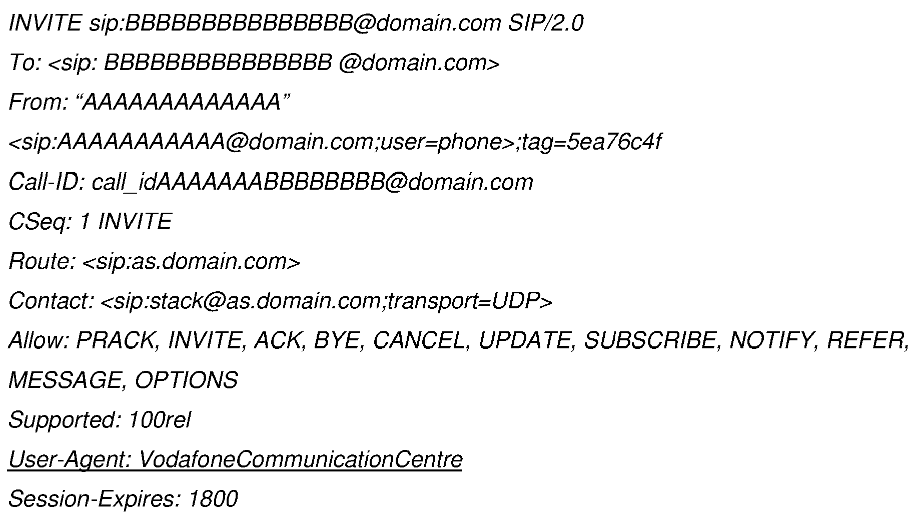

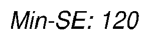

It can be seen that the SIP INVITE message is sent from the fixed phone 201 to the SBC, which sends the SIP to the CSCF, which in turn sends the SIP INVITE to an AS, for step 2 to be implemented. The User-Agent field of the SIP INVITE identifies VodafoneCommunicationCentre as the User Agent of the calling device.

### Step 2 - Receipt and forwarding of the SIP INVITE message

In step 2, the SIP INVITE received by the AS is essentially the same as the SIP INVITE generated by the phone 201 in step 1, with some additional modifications to the headers for routing and sequencers. For a B2BUA, almost all of the headers may be stored, to assist with routing of subsequent messages. For this particular use case, the relevant field is underlined above. The SIP INVITE shows that the User-Agent field contains "VodafoneCommunicationCentre", which has not been modified from when the fixed phone generated the SIP invite. This is detected and stored in memory. In step 2, the SIP INVITE is shown as being passed from the CSCF to an AS, then to the CSCF, before being sent to the SBC. The SBC sends the SIP INVITE to the end user equipment.

### Step 3 - Insertion of additional data into a SIP response message

In step 3, there are at least two options, 3A and 3B, for how the processes of this disclosure may be implemented. Option 3A is a first embodiment of the present disclosure and option 3B is a second embodiment of the present disclosure. These two options differ as to which entity is responsible for implementing the new header for the modified SIP response message.

In each case, the user equipment 202 sends a SIP response to the SBC, which sends the SIP response to a CSCF, which itself sends the SIP response to the AS. In this case, the AS is on the side of fixed phone operator, although this is not necessarily the case. The two embodiments shown by steps 3A and 3B differ in terms of where the improved SIP response header is implemented and by which entity of the network (i.e. the end user equipment 202 or the AS), but the routing of the SIP response is substantially the same in all other respects.

Whichever entity is responsible for implementing the "Combined User-Agent", it is preferred for the entity to be a "server" entity, as specified in RFC3261 (according to which a "server is a network element that receives requests in order to service them and sends back responses to those requests. Examples of servers are proxies, user agent servers, redirect servers, and registrars"). In this disclosure, this "server" may be the server part of the B2BUA, as shown in the first embodiment at step 3A, or it may be part of the end user client equipment 202, as shown in the second embodiment at step 3B. The former implementation is preferred, in which the SIP AS will be responsible for implementing the Combined User-Agent header, although the latter implementation is also advantageous.

For the "Enhanced User-Agent" headers, it is most preferred that the SIP AS will maintain the new header comprising additional data.

When a SIP response is sent using these methods, a typical response will be similar to that shown below. In this example, it is assumed that the answer will be a 183 Session Progress response, but it will be understood that other provisional responses and/or final responses can be treated the same way. For instance, 2xx Successful Responses, 3xx Redirection Responses, 4xx Client Failure Responses, 5xx Server Failure Responses and 6xx Global Failure Responses can all be augmented using the methods described herein.

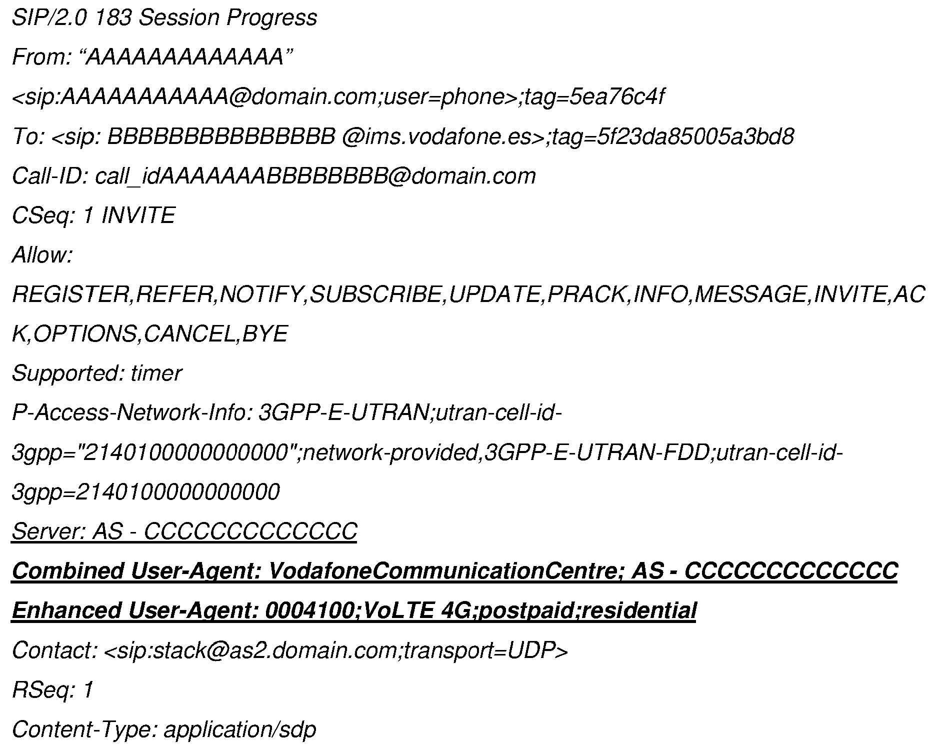

In the above SIP response message, a standard "Server" response is underlined. The two headers relevant to this disclosure are directly below the Server header, and are also underlined and shown in bold. These three fields would not be formatted in this way in practice. The UA of the terminating side, in this example, is provided in the Server header, which is one of the possibilities that the standard allows. The two additional headers are non-standard and can be used to advantageous effect, as discussed below:
The Combined User-Agent header field contains an identification of both the originating and terminating UAs (i.e. the UAs associated with the calling and called devices) and it may additionally contain a field for diversions (e.g. to indicate that the called device is performing call forwarding). Use of diversion headers (diversion or history info depending on the SIP implementation) is known and described in, for example, RFC 6044. The Combined User-Agent field is formed by the combination of the User-Agent field in section 2, which has been stored in memory, and the UA data that is already present in the Server field of the SIP 183 provisional response. Thus, it can be seen that, in generalised terms, the methods of the present disclosure may comprise determining, by the first entity (e.g. the AS), the additional data (included in the improved SIP response) based on the SIP request and/or the SIP response (prior to its modification).

The Enhanced user-Agent field contains a number of types of information. In this case, it contains the Type of Use (the billing type for the call, which in this case, is the Vodafone Spain nomenclature for a regular postpaid call 0004100), an indication of the coverage of the user (VoLTE 4G), and some information about the subscriber type (which is "postpaid;residential" and this may be inferred by the type of use). In this case, the called device is on VoLTE 4G and this may be inferred from the P-Access-Network-Info field, which states "3GPP-E-UTRAN". Hence, in generalised terms, the methods of the disclosure may comprise a step of determining, by the first entity, the additional data based on the SIP request and/or data contained within the modified SIP response (i.e. within the SIP response prior to its modification, such as, for example, standard information that may already be present in a normal SIP response). Accordingly, the additional data in at least one new header may duplicate information in the modified SIP response.

In the case that the AS provides the Combined User-Agent and the Enhanced User-Agent headers, as in step 3A, the AS may be configured to query (directly or indirectly) one or more data sources, in order to obtain some of the data stored within the new headers. If the end user client equipment 202 implements these new headers, then it may also be configured to query (directly or indirectly) one or more of such data sources.

When an AS performs manipulations of SIP responses, suitable information sources for providing the additional data in the modified SIP response include:
- A database that contains an enriched CUR (Common User Repository), where every customer of a network operator is included with some parameters such as status (e.g. active/inactive), customer type (e.g. prepaid/postpaid/corporate), tariff data, services (multiSIM, fixed, etc.).
- A Register Control database that includes the information included in every user third party registration message. It includes data such as: cell-id of the customer at the time of the registration, IMSI, IMEI and IP.
- HSS (Home Subscriber Server)/HLR (Home Location Register): this contains information about services and location.
- IMS: this interface will be the main source of information for the present disclosure and it includes the SIP messages that the GCC sends and receives; it contains both UAs (of the calling and call receiving devices), information about a previous diversion (history-info and diversions headers), current location, p-early-media, user capabilities, and so on.

### Step 4 - Use of the modified SIP INVITE message

Upon receiving the provisional 1xx response message, the SBC can apply rules to obtain information from the response message, relying only on the self-contained information in the SIP message that has been added in step 3. This avoids the need make queries to internal or external databases, reducing bandwidth and computational requirements while allowing the network to act more quickly in response to SIP responses.

In this case, as the Combined User-Agent header contains the string "VodafoneCommunicationCentre" in the calling UA, it will decide to strip the SDP of this message and eliminate the conflicting element of the call flow. This may eliminate the early media audio flow, providing significant advantages in some cases. In this context, early media refers to media (e.g., audio and video) that is exchanged before a particular session is accepted by the called user. Within a dialogue, early media occurs from the moment the initial INVITE is sent until the User Agent Server (UAS) generates a final response. It may be unidirectional or bidirectional, and can be generated by the caller, the callee, or both. Typical examples of early media generated by the callee are ringing tone and announcements (e.g. queuing status). Early media generated by the caller typically comprises voice commands or dual tone multi-frequency (DTMF) tones to drive interactive voice response (IVR) systems. The additional information in the SIP responses of the present disclosure may therefore be used to reduce the frequency of problems arising due to early media.

Various other actions to maintain and/or improve the operation of the network or the session can be taken depending on the use case. For instance, as noted previously, handsets carry an ad-hoc implementation of the IR.92 standard and not every aspect of IR.92 is mandatory. Thus, if the Combined User-Agent and/or the Enhanced User-Agent header comprise data indicating that one of the calling and called devices implements IR.92 in a way that is incompatible with the other device, then the SBC may further modify the SIP response so as to ensure compatibility. For example, it can modify the To or From header to ensure proper information presentation for the other users since, for example, some devices only accept SIP URIs and not tel URIs.

As an example, in some cases, a user device may receive a SIP 183 message, and different devices might react in different ways, with some phones starting to ring and other phones not starting to ring. The present disclosure advantageously helps to forestall such issues.

In a further example, in a case where information about the called device 202 is known, in a conventional SIP implementation, it may be necessary to acquire information about the calling device 201. In this case, a SBC could contact a database, correlate the acquired information, query other databases for rules for the particular combination of devices and manipulate the header once these queries have been completed. In contrast, according to the present disclosure, when a SIP response comprises all information needed for ensuring effective communication between the two devices, there is a reduced need to contact external databases to find rules for the particular combination of devices. For instance, when a Samsung S10 mobile phone calls an old fixed phone Huawei device, a rule could be to remove a field from the SDP to ensure seamless functionality. Aspects of the present disclosure make this process easier and more efficient.

It is preferred that Step 3 of this embodiment, in which the SIP headers are manipulated, are performed by an AS, because ASs are typically connected to many information sources and so are ideal for performing such manipulations, whilst it is preferred that the SBC simply uses the manipulated headers to control the session. Nevertheless, the above functionality can be performed by other entities of telecommunication networks.

In any event, once the SBC has extracted the required information from the enhanced SIP response message, and optionally made any further changes to the SIP response, it will forward the SIP response to the SIP phone 201 and the SIP protocol will continue to initiate and maintain a call between the SIP phone 201 and the VoLTE phone 202 in a conventional manner. As noted previously, response messages at any stage of a call can be enhanced using the headers described herein.

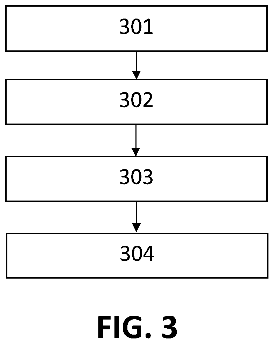

Turning next to Figure 3, there is shown a flowchart depicting a generalised method for implementing the present disclosure. For instance, Figure 3 shows the embodiment of Figure 2 in a generalised sense.

In Figure 3, there is depicted a method for facilitating a communication session between a calling device (e.g. the device 201 of Figure 2) and a called device (e.g. the device 202 of Figure 2). The method relates to the case in which an entity of the network receives and modifies an existing SIP response generated by a UE. Thus, the method comprises an optional step of receiving 301, at a first entity, a session initiation protocol, SIP, response. In the case where the UE itself generates a modified SIP response, the step of receiving 301 may be omitted entirely. In any case, the SIP response is a response to a SIP request made by the calling device 201. The method further comprises generating 302, by the first entity (e.g. an AS), a modified SIP response including additional data. The additional data comprises an indication of at least one characteristic of at least one of the calling device and the called device. As noted above in relation to Figure 2, various other additional data can be included within the modified SIP response. The method further comprises receiving 303, at a second entity (e.g. a SBC), the modified SIP response. Finally, the method comprises applying 304, by the second entity, one or more rules to the modified SIP response based on the additional data. The step of applying one or more rules can involve making further modifications to the SIP response or to the associated SDP. For instance, in generalised terms, applying one or more rules may comprise making one or more further modifications to the modified SIP response; and/or making one or more modifications to a session description protocol, SDP, message associated with the modified SIP response. Such actions may improve the process of establishing a communication session by reducing the likelihood of issues caused by devices having different implementations of standards.

It will be appreciated that many variations may be made to the above apparatus and methods whilst retaining the advantages noted previously. For example, the SIP response message described above was a SIP 1xx provisional response, but various types of responses can be employed.

Moreover, whilst the above embodiments have described adding specific headers comprising specific information, it will be appreciated that various types of information can be added to a SIP response to provide the advantages noted above. For instance, while an indication of a user agent of the calling device and/or the called device is added to a SIP message header, any characteristic of the calling device may be included in a SIP message (in a new header or in an existing header). Moreover, a SIP response may be modified such that it comprises an indication of any characteristic of the called device. The characteristics may be determined based on the SIP response and/or based on the SIP request. Examples of further data that may be included in a SIP response include one or more of: an indication of a communication protocol of the communication session; an access network of the calling device and/or the called device; an indication of a user type of the calling device and/or the called device; an indication of a previous diversion of the SIP request; a history-info header and/or diversions headers; an indication of a current location of the calling device and/or the called device; a p-early-media header; and/or an indication of user capabilities of the calling device and/or the called device. Providing of this information in a SIP response may advantageously allow entities (e.g. SBCs) that use the SIP response to act more efficiently by reducing the need to query external data sources.

When an entity (e.g. such as an AS or B2BUA) creates modified SIP responses, they are likely to be on the calling party's side of the network, but it may be possible and advantageous in some cases to make one or more queries about the called party. For example, this may be possible if the called party uses the same network as the calling party, or if communication with suitable data sources is possible.

Various advantages will be apparent to the skilled person from this disclosure. For instance, a new header containing information about another party's user agent can be captured and detected. Moreover, it may be possible to determine if the detected header has been generated on an AS level or directly by the terminating UA, depending on whether the standard User-Agent header of an SIP message is the same as or is different from this new header.

In the above-described embodiments, a modified SIP response is described that has only been modified to include additional data by a single entity. However, it is possible for two or more entities to modify SIP responses in accordance with the present disclosure. For example, a UE may generate a modified SIP response including any of the additional data described herein. Then, a further entity in the network (e.g. an AS) may receive the modified SIP response and make further modifications to the modified SIP response, to include further additional data as described above. Such an approach is advantageous because different entities may be more easily able to include different types of additional data in the modified SIP response. For example, a smartphone as the UE may be more easily able to provide additional data such as its TAC and/or FAC than would an AS, as an AS might need to query an external database to enrich a header to include such additional data. Conversely, the UE itself may not store information about its subscription, so an AS may be better placed to include this additional data in the modified SIP response. Thus, modifications to the SIP response can advantageously be made by one entity or by multiple entities in the network.

The type of additional data added into a modified SIP response may be divided broadly into two classes of data: data about a device (e.g. make of phone, its hardware, etc., which a UE can provide itself); and data about a user (e.g. data about the type of subscription, which can be retrieved from databases). An end user device can easily add about its own capabilities, but an AS may be add much more information about the user's subscription (e.g. an indication of if user is prepaid, or information about how much data a user uses, or their data allowance, or whether they have funds in their account).

The disclosure provides advantageous methods for generating modified SIP messages. It will be appreciated that such methods may be computer-implemented methods carried out by one or more computing devices (e.g. devices having processors). Also provided are data processing apparatus/devices/systems comprising one or more processors configured to perform any of the methods described herein. Also provided are one or more computer programs comprising instructions that, when executed by one or more computing devices, cause the computing devices to carry out any of the methods described herein. As the disclosure provides methods that may be executed by a plurality of entities, a suite of computer programs is also provided, the suite of computer programs configured to cause different entities to execute the methods of the present disclosure. Such computer programs may be provided on one or more computer-readable data carriers having stored thereon the computer program(s) of the present disclosure. A data carrier signal carrying such computer programs is also provided.

Each feature disclosed in this specification, unless stated otherwise, may be replaced by alternative features serving the same, equivalent or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" (such as a header or a message) means "one or more" (for instance, one or more coupling headers, or one or more messages). Throughout the description and claims of this disclosure, the words "comprise", "including", "having" and "contain" and variations of the words, for example "comprising" and "comprises" or similar, mean "including but not limited to", and are not intended to (and do not) exclude other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination). Nevertheless, the scope of protection is defined by the appended claims.

## Claims

1. A method for facilitating a communication session between a calling device (101, 201, 201) and a called device (102, 202), the method comprising:
generating, by a first entity, a modified SIP response including additional data, wherein generating the modified SIP response comprises adding at least one new header to a SIP response, the new header comprising the additional data, wherein the modified SIP response is a response to a SIP request made by the calling device (101, 201, 201), the additional data comprising an indication of at least one characteristic of at least one of the calling device (101, 201, 201) and the called device (102, 202), wherein the indication of at least one characteristic of the calling device (101, 201, 201) and/or the called device (102, 202) comprises an indication of a user agent of the calling device (101, 201, 201) and/or the called device (102, 202) respectively;
receiving, at a second entity, the modified SIP response; and
applying, by the second entity, one or more rules to the modified SIP response based on the additional data.

2. The method of claim 1, further comprising a step of determining, by the first entity, the additional data based:
on the SIP request; and/or
data contained within the modified SIP response prior to its modification.

3. The method of any preceding claim, wherein the additional data in the at least one new header duplicates information in the modified SIP response.

4. The method of any preceding claim, wherein the step of generating the modified SIP response comprises adding a plurality of new headers to a SIP response, each of the plurality of new headers comprising the additional data.

5. The method of any preceding claim, wherein the at least one characteristic of at least one of the calling device (101, 201) and the called device (102, 202) comprises an indication of at least one capability of at least one of the calling device (101, 201) and the called device (102, 202).

6. The method of any preceding claim, wherein the additional data comprises an indication of at least one characteristic of the called device (102, 202), wherein the indication of at least one characteristic of the called device (102, 202) comprises an indication of whether the called device (102, 202) is performing call forwarding.

7. The method of any preceding claim, comprising a step of obtaining, by the first entity, provisioning data for the calling device (101, 201) and/or the called device (102, 202) from a common user repository, CUR, wherein the additional data comprises the provisioning data.

8. The method of any preceding claim, wherein the additional data comprises any one or more of:
an indication of a communication protocol of the communication session;
an access network of the calling device (101, 201) and/or the called device (102, 202);
an indication of a user type of the calling device (101, 201) and/or the called device (102, 202);
an indication of a subscription for the calling device (101, 201) and/or the called device (102, 202);
an indication of a data allowance for the calling device (101, 201) and/or the called device (102, 202);
an indication of a previous diversion of the SIP request;
a history-info header and/or diversions headers;
an indication of a current location of the calling device (101, 201) and/or the called device (102, 202);
a p-early-media header;
a type allocation code, TAC, and/or a final assembly code, FAC, for the calling device (101, 201) and/or the called device (102, 202); and/or
tariff data for the calling device (101, 201) and/or the called device (102, 202).

9. The method of any preceding claim, wherein applying one or more rules to the modified SIP response comprises any one or more of:
making one or more further modifications to the modified SIP response; and/or
making one or more modifications to a session description protocol, SDP, message associated with the modified SIP response.

10. The method of any preceding claim, wherein the first entity is an application server, AS, or a server of a back-to-back user agent, B2BUA, or a user equipment, UE, or the called device (102, 202).

11. The method of any preceding claim, wherein the second entity is an application server, AS, a call session control function, CSCF, or a session border controller, SBC.

12. A telecommunications network configured to perform the method of any preceding claim.

13. An entity (103a, 103b) of a telecommunications network for facilitating a communication session between a calling device (101, 201) and a called device (102, 202), the entity (103a, 103b) configured to:
receive a modified session initiation protocol, SIP, response including additional data in an additional header that is different to a user agent header of the modified SIP response, wherein the modified SIP response is a response to a SIP request made by the calling device (101, 201), the additional data comprising an indication of at least one characteristic of at least one of the calling and the called device (102, 202), wherein the indication of at least one characteristic of the calling device (101, 201) and/or the called device (102, 202) comprises an indication of a user agent of the calling device (101, 201) and/or the called device (102, 202) respectively; and
apply one or more rules to the modified SIP response based on the additional data.

14. An entity (103a, 103b) for communicating via a telecommunications network, configured to:
generate a modified SIP response including additional data by adding at least one new header to a SIP response, the new header comprising the additional data, wherein the modified SIP response is a response to a SIP request made by a calling device (101, 201) to a called device (102, 202), the additional data comprising an indication of at least one characteristic of at least one of the calling device (101, 201) and the called device (102, 202), wherein the indication of at least one characteristic of the calling device (101, 201) and/or the called device (102, 202) comprises an indication of a user agent of the calling device (101, 201) and/or the called device (102, 202) respectively; and
send the modified SIP response to another entity (103a, 103b) of the telecommunications network.

## Patentansprüche

1. Verfahren zum Ermöglichen einer Kommunikationssitzung zwischen einer anrufenden Vorrichtung (101, 201, 201) und einer angerufenen Vorrichtung (102, 202), wobei das Verfahren umfasst:
Erzeugen, durch eine erste Einheit, einer geänderten SIP-Antwort beinhaltend zusätzliche Daten, wobei das Erzeugen der geänderten SIP-Antwort umfasst, dass zumindest ein neuer Header zu einer SIP-Antwort hinzugefügt wird, wobei der neue Header die zusätzlichen Daten umfasst, wobei die geänderte SIP-Antwort eine Antwort auf eine SIP-Anfrage der anrufenden Vorrichtung (101, 201, 201) ist, wobei die zusätzlichen Daten eine Angabe zumindest einer Eigenschaft von zumindest einer der anrufenden Vorrichtung (101, 201, 201) und der angerufenen Vorrichtung (102, 202) umfassen, wobei die Angabe zumindest einer Eigenschaft der anrufenden Vorrichtung (101, 201, 201) und/oder der angerufenen Vorrichtung (102, 202) eine Angabe eines Benutzeragenten von jeweils der anrufenden Vorrichtung (101, 201, 201) und/oder der angerufenen Vorrichtung (102, 202) umfasst;
Empfangen, an einer zweiten Einheit, der geänderten SIP-Antwort; und
Anwenden, durch die zweite Einheit, einer oder mehrerer Regeln auf die geänderte SIP-Antwort auf Basis der zusätzlichen Daten.

2. Verfahren nach Anspruch 1, ferner umfassend einen Schritt des Bestimmens, durch die erste Einheit, der zusätzlichen Daten auf Basis:
der SIP-Anfrage; und/oder
von Daten, die vor der Änderung in der SIP-Antwort enthalten waren.

3. Verfahren nach einem vorstehenden Anspruch, wobei die zusätzlichen Daten in dem zumindest einen neuen Header Informationen in der geänderten SIP-Antwort duplizieren.

4. Verfahren nach einem vorstehenden Anspruch, wobei der Schritt des Erzeugens der geänderten SIP-Antwort umfasst, dass eine Vielzahl neuer Header zu einer SIP-Antwort hinzugefügt wird, wobei jeder aus der Vielzahl neuer Header die zusätzlichen Daten umfasst.

5. Verfahren nach einem vorstehenden Anspruch, wobei die zumindest eine Eigenschaft von zumindest einer der anrufenden Vorrichtung (101, 201) und der angerufenen Vorrichtung (102, 202) eine Angabe zumindest einer Funktion von zumindest einer der anrufenden Vorrichtung (101, 201) und der angerufenen Vorrichtung (102, 202) umfasst.

6. Verfahren nach einem vorstehenden Anspruch, wobei die zusätzlichen Daten eine Angabe zumindest einer Eigenschaft der angerufenen Vorrichtung (102, 202) umfassen, wobei die Angabe zumindest einer Eigenschaft der angerufenen Vorrichtung (102, 202) eine Angabe umfasst, ob die angerufene Vorrichtung (102, 202) eine Anrufweiterleitung durchführt.

7. Verfahren nach einem vorstehenden Anspruch, umfassend einen Schritt des Abrufens, durch die erste Einheit, von Bereitstellungsdaten für die anrufende Vorrichtung (101, 201) und/oder die angerufene Vorrichtung (102, 202) aus einem gemeinsamen Benutzerrepository (Common User Repository, CUR), wobei die zusätzlichen Daten die Bereitstellungsdaten umfassen.

8. Verfahren nach einem vorstehenden Anspruch, wobei die zusätzlichen Daten eines oder mehrere umfassen von:
einer Angabe eines Kommunikationsprotokolls der Kommunikationssitzung;
einem Zugangsnetz der anrufenden Vorrichtung (101, 201) und/oder der angerufenen Vorrichtung (102, 202);
einer Angabe eines Benutzertyps der anrufenden Vorrichtung (101, 201) und/oder der angerufenen Vorrichtung (102, 202);
einer Angabe eines Abonnements für die anrufende Vorrichtung (101, 201) und/oder die angerufene Vorrichtung (102, 202);
einer Angabe eines Datenvolumens für die anrufende Vorrichtung (101, 201) und/oder die angerufene Vorrichtung (102, 202);
einer Angabe einer vorangegangenen Umleitung der SIP-Anfrage;
einem History-Info-Header und/oder Diversions-Headers;
einer Angabe eines aktuellen Standorts der anrufenden Vorrichtung (101, 201) und/oder der angerufenen Vorrichtung (102, 202);
einem P-Early-Media-Header;
einem Typzuordnungscode (Type Allocation Code, TAC) und/oder einem Endmontagecode (Final Assembly Code, FAC) für die anrufende Vorrichtung (101, 201) und/oder die angerufene Vorrichtung (102, 202); und/oder
Preisdaten für die anrufende Vorrichtung (101, 201) und/oder die angerufene Vorrichtung (102, 202).

9. Verfahren nach einem vorstehenden Anspruch, wobei das Anwenden einer oder mehrerer Regeln auf die geänderte SIP-Antwort eines oder mehrere umfasst von:
Vornehmen einer oder mehrerer weiterer Änderungen an der geänderten SIP-Antwort; und/oder
Vornehmen einer oder mehrerer Änderungen an einer SDP-Nachricht (Session Description Protocol, Sitzungsbeschreibungsprotokoll), die mit der geänderten SIP-Antwort verbunden ist.

10. Verfahren nach einem vorstehenden Anspruch, wobei die erste Einheit ein Anwendungsserver (AS) oder ein Server eines Back-to-Back-Benutzeragenten (Back-to-Back User Agent, B2BUA) oder ein Benutzergerät (User Equipment, UE) oder die angerufene Vorrichtung (102, 202) ist.

11. Verfahren nach einem vorstehenden Anspruch, wobei die zweite Einheit ein Anwendungsserver (AS), eine Rufsitzungssteuerungsfunktion (Call Session Control Function, CSCF) oder ein Session Border Controller (SBC) ist.

12. Telekommunikationsnetz, konfiguriert zum Durchführen des Verfahrens nach einem vorstehenden Anspruch.

13. Einheit (103a, 103b) eines Telekommunikationsnetzes zum Erleichtern einer Kommunikationssitzung zwischen einer anrufenden Vorrichtung (101, 201) und einer angerufenen Vorrichtung (102, 202), wobei die Einheit (103a, 103b) konfiguriert ist zum:
Empfangen einer geänderten SIP-Antwort (Session Initiation Protocol, Sitzungseinleitungsprotokoll) beinhaltend zusätzliche Daten in einem zusätzlichen Header, der sich von einem Benutzeragentenheader der geänderten SIP-Antwort unterscheidet, wobei die geänderte SIP-Antwort eine Antwort auf eine SIP-Anfrage der anrufenden Vorrichtung (101, 201) ist, wobei die zusätzlichen Daten eine Angabe zumindest einer Eigenschaft von zumindest einer der anrufenden und der angerufenen Vorrichtung (102, 202) umfassen, wobei die Angabe zumindest einer Eigenschaft der anrufenden Vorrichtung (101, 201) und/oder der angerufenen Vorrichtung (102, 202) eine Angabe eines Benutzeragenten von jeweils der anrufenden Vorrichtung (101, 201) und/oder der angerufenen Vorrichtung (102, 202) umfasst; und
Anwenden einer oder mehrerer Regeln auf die geänderte SIP-Antwort auf Basis der zusätzlichen Daten.

14. Einheit (103a, 103b) zum Kommunizieren über ein Telekommunikationsnetz, konfiguriert zum:
Erzeugen einer geänderten SIP-Antwort beinhaltend zusätzliche Daten, indem zumindest ein neuer Header zu einer SIP-Antwort hinzugefügt wird, wobei der neue Header die zusätzlichen Daten umfasst, wobei die geänderte SIP-Antwort eine Antwort auf eine SIP-Anfrage einer anrufenden Vorrichtung (101, 201) an eine angerufene Vorrichtung (102, 202) ist, wobei die zusätzlichen Daten eine Angabe zumindest einer Eigenschaft von zumindest einer der anrufenden Vorrichtung (101, 201) und der angerufenen Vorrichtung (102, 202) umfassen, wobei die Angabe zumindest einer Eigenschaft der anrufenden Vorrichtung (101, 201) und/oder der angerufenen Vorrichtung (102, 202) eine Angabe eines Benutzeragenten von jeweils der anrufenden Vorrichtung (101, 201) und/oder der angerufenen Vorrichtung (102, 202) umfasst; und
Senden der geänderten SIP-Antwort an eine andere Einheit (103a, 103b) des Telekommunikationsnetzes.

## Revendications

1. Procédé destiné à faciliter une session de communication entre un dispositif appelant (101, 201, 201) et un dispositif appelé (102, 202), le procédé comprenant :
la génération, par une première entité, d'une réponse SIP modifiée comportant des données supplémentaires, dans lequel la génération de la réponse SIP modifiée comprend l'ajout d'au moins un nouvel en-tête à une réponse SIP, le nouvel en-tête comprenant les données supplémentaires, dans lequel la réponse SIP modifiée est une réponse à une demande SIP faite par le dispositif appelant (101, 201, 201), les données supplémentaires comprenant une indication d'au moins une caractéristique d'au moins l'un parmi le dispositif appelant (101, 201, 201) et le dispositif appelé (102, 202), dans lequel l'indication d'au moins une caractéristique du dispositif appelant (101, 201, 201) et/ou du dispositif appelé (102, 202) comprend une indication d'un agent d'utilisateur du dispositif appelant (101, 201, 201) et/ou du dispositif appelé (102, 202) respectivement ;
la réception, au niveau d'une deuxième entité, de la réponse SIP modifiée ; et
l'application, par la deuxième entité, d'une ou de plusieurs règles à la réponse SIP modifiée sur la base des données supplémentaires.

2. Procédé selon la revendication 1, comprenant en outre une étape de détermination, par la première entité, des données supplémentaires sur la base :
de la demande SIP ; et/ou
de données contenues dans la réponse SIP modifiée avant sa modification.

3. Procédé selon l'une quelconque des revendications précédentes, dans lequel les données supplémentaires dans l'au moins un nouvel en-tête dupliquent des informations dans la réponse SIP modifiée.

4. Procédé selon l'une quelconque des revendications précédentes, dans lequel l'étape de génération de la réponse SIP modifiée comprend l'ajout d'une pluralité de nouveaux en-têtes à une réponse SIP, chacun de la pluralité de nouveaux en-têtes comprenant les données supplémentaires.

5. Procédé selon l'une quelconque des revendications précédentes, dans lequel l'au moins une caractéristique de l'au moins un parmi le dispositif appelant (101, 201) et le dispositif appelé (102, 202) comprend une indication d'au moins une capacité d'au moins l'un parmi le dispositif appelant (101, 201) et le dispositif appelé (102, 202).

6. Procédé selon l'une quelconque des revendications précédentes, dans lequel les données supplémentaires comprennent une indication d'au moins une caractéristique du dispositif appelé (102, 202), dans lequel l'indication d'au moins une caractéristique du dispositif appelé (102, 202) comprend une indication du fait que le dispositif appelé (102, 202) réalise ou non un transfert d'appel.

7. Procédé selon l'une quelconque des revendications précédentes, comprenant une étape d'obtention, par la première entité, de données d'approvisionnement pour le dispositif appelant (101, 201) et/ou le dispositif appelé (102, 202) à partir d'un référentiel d'utilisateur commun, CUR, dans lequel les données supplémentaires comprennent les données d'approvisionnement.

8. Procédé selon l'une quelconque des revendications précédentes, dans lequel les données supplémentaires comprennent l'un quelconque ou plusieurs parmi :
une indication d'un protocole de communication de la session de communication ;
un réseau d'accès du dispositif appelant (101, 201) et/ou du dispositif appelé (102, 202) ;
une indication d'un type d'utilisateur du dispositif appelant (101, 201) et/ou du dispositif appelé (102, 202) ;
une indication d'un abonnement pour le dispositif appelant (101, 201) et/ou le dispositif appelé (102, 202) ;
une indication d'une limite d'utilisation de données pour le dispositif appelant (101, 201) et/ou le dispositif appelé (102, 202) ;
une indication d'une déviation précédente de la demande SIP ;
un en-tête d'informations d'historique et/ou des en-têtes de déviation ;
une indication d'un emplacement actuel du dispositif appelant (101, 201) et/ou du dispositif appelé (102, 202) ;
un en-tête de gestion des médias précoces (« p-early-media ») ;
un code d'allocation type, TAC, et/ou un code d'assemblage final, FAC, pour le dispositif appelant (101, 201) et/ou le dispositif appelé (102, 202) ; et/ou
des données tarifaires pour le dispositif appelant (101, 201) et/ou le dispositif appelé (102, 202).

9. Procédé selon l'une quelconque des revendications précédentes, dans lequel l'application d'une ou de plusieurs règles à la réponse SIP modifiée comprend l'un quelconque ou plusieurs parmi :
l'apport d'une ou de plusieurs autres modifications à la réponse SIP modifiée ; et/ou
l'apport d'une ou de plusieurs modifications à un message de protocole de description de session, SDP, associé à la réponse SIP modifiée.

10. Procédé selon l'une quelconque des revendications précédentes, dans lequel la première entité est un serveur d'application, AS, ou un serveur d'un agent d'utilisateur dos-à-dos, B2BUA, ou un équipement utilisateur, UE, ou le dispositif appelé (102, 202).

11. Procédé selon l'une quelconque des revendications précédentes, dans lequel la deuxième entité est un serveur d'application, AS, une fonction de commande de session d'appel, CSCF, ou un contrôleur de session en périphérie, SBC.

12. Réseau de télécommunications configuré pour réaliser le procédé de l'une quelconque des revendications précédentes.

13. Entité (103a, 103b) d'un réseau de télécommunications destinée à faciliter une session de communication entre un dispositif appelant (101, 201) et un dispositif appelé (102, 202), l'entité (103a, 103b) étant configurée pour :
recevoir une réponse de protocole d'ouverture de session, SIP, modifiée comportant des données supplémentaires dans un en-tête supplémentaire qui est différent d'un en-tête d'agent d'utilisateur de la réponse SIP modifiée, dans laquelle la réponse SIP modifiée est une réponse à une demande SIP faite par le dispositif appelant (101, 201), les données supplémentaires comprenant une indication d'au moins une caractéristique d'au moins l'un parmi le dispositif appelant et le dispositif appelé (102, 202), dans laquelle l'indication d'au moins une caractéristique du dispositif appelant (101, 201) et/ou du dispositif appelé (102, 202) comprend une indication d'un agent d'utilisateur du dispositif appelant (101, 201) et/ou du dispositif appelé (102, 202) respectivement ; et
appliquer une ou plusieurs règles à la réponse SIP modifiée sur la base des données supplémentaires.

14. Entité (103a, 103b) destinée à communiquer via un réseau de télécommunications, configurée pour :
générer une réponse SIP modifiée comportant des données supplémentaires par l'ajout d'au moins un nouvel en-tête à une réponse SIP, le nouvel en-tête comprenant les données supplémentaires, dans laquelle la réponse SIP modifiée est une réponse à une demande SIP faite par un dispositif appelant (101, 201) à un dispositif appelé (102, 202), les données supplémentaires comprenant une indication d'au moins une caractéristique d'au moins l'un parmi le dispositif appelant (101, 201) et le dispositif appelé (102, 202), dans laquelle l'indication d'au moins une caractéristique du dispositif appelant (101, 201) et/ou du dispositif appelé (102, 202) comprend une indication d'un agent d'utilisateur du dispositif appelant (101, 201) et/ou du dispositif appelé (102, 202) respectivement ; et
l'envoi de la réponse SIP modifiée à une autre entité (103a, 103b) du réseau de télécommunications.
